# FASCICULE DE BREVET EUROPEEN

(11) **EP 3 971 091 B1**
(45) Date de publication et mention de la délivrance du brevet: **05.04.2023**
(21) Numéro de dépôt: 21196933.2
(22) Date de dépôt: 15.09.2021
(51) Int. Cl.: B64D 27/18, B64D 27/26

(54) **ASSEMBLAGE D'UN MOTEUR AVEC UN MÂT D'AÉRONEF**
ZUSAMMENBAU EINES MOTORS MIT EINEM LUFTFAHRZEUGMAST
ASSEMBLY OF AN ENGINE WITH AN AIRCRAFT MAST

(30) Priorité: 21.09.2020 FR 2009554
(43) Date de publication de la demande: 23.03.2022
(73) Titulaire: AIRBUS OPERATIONS (S.A.S.), 31060 Toulouse (FR)
(72) Inventeur: BERJOT, Michael, 31060 TOULOUSE Cedex 9 (FR); BRAS, William, 31060 TOULOUSE Cedex 9 (FR); GUENEAU, Germain, 31060 TOULOUSE Cedex 9 (FR); LANSIAUX, Rémi, 31060 TOULOUSE Cedex 9 (FR)
(74) Mandataire: Jardel, Marc Henry Philippe

(56) Documents cités:
- EP-A1- 3 705 404
- FR-A1- 2 861 364
- FR-A1- 2 914 908
- FR-A1- 3 058 986
- FR-A1- 3 093 704

## Description

La présente invention concerne un assemblage d'un moteur avec un mat d'aéronef.

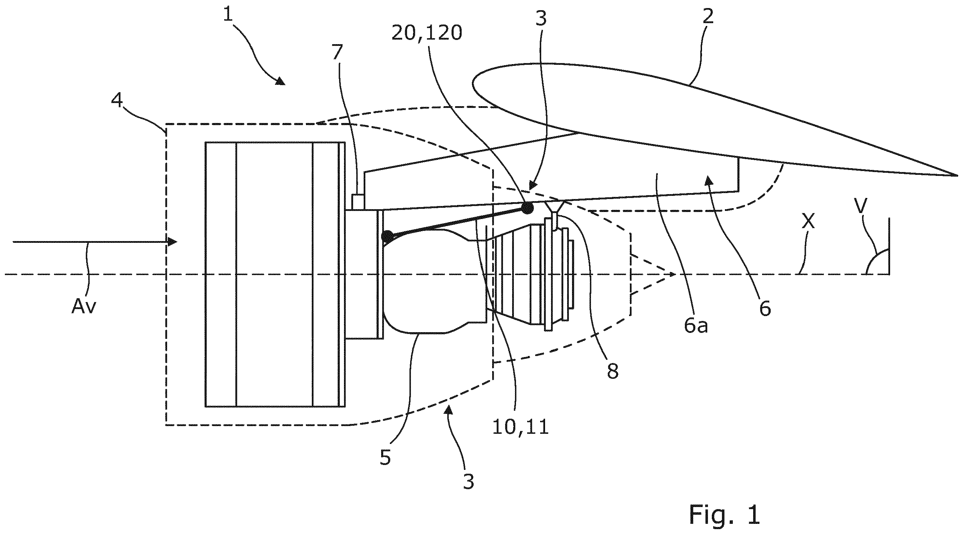

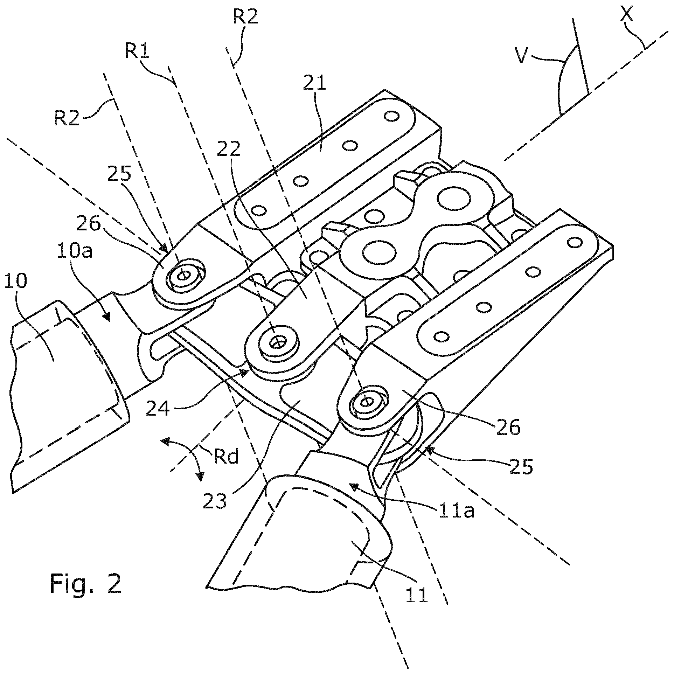

De manière classique, et en référence avec les figures 1 et 2, un ensemble propulsif 1 fixé sous l'aile 2 d'un aéronef comprend une turbomachine 3 avec une nacelle 4 entourant un moteur 5, et un mât 6 de fixation de la turbomachine à l'aile 2 de l'aéronef. Le mat 6 est constitué d'une structure primaire 6a sous la forme d'un caisson. Le moteur 5 est fixé à la structure primaire 6a via un système d'attaches moteur constitué à l'avant par une attache moteur avant 7, à l'arrière par une attache moteur arrière 8, et entre les attaches moteurs avant et arrière 7,8 , via un assemblage de reprise d'effort assurant la reprise des efforts de poussées du moteur 5 et comprenant deux bielles de poussées 10,11 reliant le moteur 5 et un dispositif de liaison 20 solidaire du mat 6.

Le dispositif de liaison 20 comprend :
- un sabot 21, plaqué contre et fixé à la face inférieure (face en regard du sol) de la structure primaire 6a et présentant une chape principale 22 ; et
- un palonnier 23 relié à la chape principale 22 par une liaison principale 24 présentant un axe de rotation principal R1 positionné dans un plan de symétrie V du dispositif de liaison 20 passant par l'axe longitudinal X du moteur 5.

Les deux bielles de poussées 10,11 sont situées de part et d'autre du plan de symétrie V, et chaque bielle 10,11 comprend une extrémité arrière 10a, 11a reliée au palonnier 23 et une extrémité avant reliée au moteur 5.

L'extrémité arrière de chacune des bielles de poussée 10,11 est reliée à l'une des extrémités du palonnier 23 par une liaison secondaire 25 présentant un axe de rotation secondaire R2 positionné dans un plan parallèle au plan de symétrie V du dispositif de liaison 20.

Les bielles de poussées 10,11, les liaisons secondaires 25, le palonnier 23, la liaison principale 24 et le sabot 21 définissent deux chemins primaires de poussée entre le moteur 5 et la structure primaire 6a.

Le dispositif de liaison 20 comprend également deux ferrures 26 à deux branches solidaires du sabot 21 et disposées de part et d'autre de la chape principale 22 par rapport au plan de symétrie V. Chaque ferrure 26 est dédiée à une bielle de poussée 10,11. Les branches de la ferrure 26 prennent l'extrémité arrière 10a, 11a de la bielle de poussée 10,11 en sandwich. Les ferrures 26 sont reliées aux extrémités arrière 10a, 11a des bielles de poussée 10,11 par les liaisons secondaires 25. Les bielles de poussées 10,11, les liaisons secondaires 25, et les ferrures 26 définissent deux chemins secondaires de poussée, entre le moteur 5 et la structure primaire 6a, qui compensent une éventuelle défaillance d'un des chemins primaires de poussée.

Le palonnier 23 peut pivoter autour d'un axe de rotation de débattement Rd contenu dans le plan de symétrie V et perpendiculaire à l'axe de rotation principal R1. L'amplitude de débattement du palonnier 23 autour de l'axe de rotation de débattement Rd est limitée par l'espace entre les branches des ferrures 26. Les vibrations induites par le fonctionnement du moteur 5 génèrent un mouvement d'oscillation du palonnier 23 autour de l'axe de débattement Rd. Ce mouvement d'oscillation, amplifié par certaines fréquences de vibration du moteur 5, créent de la fatigue mécanique du palonnier 23, des liaisons entre le palonnier 23 et le sabot 21 et entre les bielles de poussées 10,11 et le palonnier 23. Des inspections fréquentes doivent être entreprises par des opérateurs pour vérifier le bon état mécanique des composants cités, et pour les remplacer en cas de signe de fatigue mécanique trop importante. Ces remplacements sont onéreux pour les exploitants des aéronefs.

La présente invention vise à remédier à tout ou partie des inconvénients de l'art antérieur. A cet effet, l'invention a pour objet un assemblage d'un moteur avec un mat d'aéronef, tel que revendiqué à la revendication 1. La demande de brevet EP3705404 décrit un assemblage d'un moteur avec un mât selon de l'état de l'art.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la figure 1 est une représentation schématique latérale d'un ensemble propulsif (la nacelle étant représentée en pointillés) ;
- la figure 2 est une vue en perspective d'un assemblage de reprise d'effort comprenant un dispositif de liaison fixé à des bielles de poussée, selon l'art antérieur ;
- la figure 3 est une vue en perspective d'un assemblage de reprise d'effort comprenant un dispositif de liaison fixé à des bielles de poussée, selon un mode de réalisation de l'invention ;
- la figure 4 est une vue en éclaté de l'assemblage de reprise d'effort représenté à la figure 3 ;
- la figure 5 est une vue en coupe, selon le plan de coupe A-A, d'une partie de l'assemblage de reprise d'effort représenté à la figure 3, la partie étant représentée étant pointée par la flèche Z.

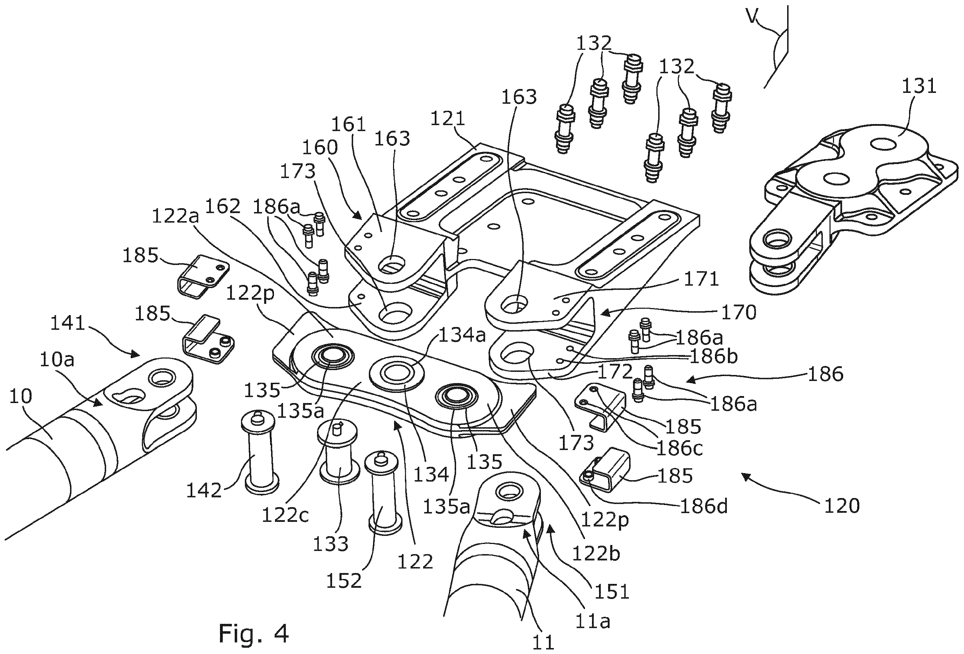

En référence avec les figures 1, 3 à 5, un assemblage d'un moteur 5 avec la structure primaire 6a d'un mât 6 d'aéronef comprend à l'avant, une attache moteur avant 7, à l'arrière, une attache moteur arrière 8, et entre les attaches moteur avant et arrière 7,8, un assemblage de reprise d'effort.

Dans la description qui suit, les termes relatifs à une position sont pris en référence à la flèche Av représentant la direction d'écoulement des flux d'air entrant dans le moteur 5 lors du fonctionnement de ce dernier.

L'assemblage de reprise d'effort comprend un dispositif de liaison 120 solidaire de la structure primaire 6a et deux bielles 10,11 fixées d'une part au moteur, et d'autre part au dispositif de liaison 120.

Le dispositif de liaison 120 comprend un sabot 121 relié à la structure primaire 6a par des éléments de fixation (représentés schématiquement par des traits d'axe L), ainsi qu'un palonnier 122 reliée au sabot 121 par une liaison principale 130.

Le palonnier 122 se présente sous la forme d'une ferrure plate s'étendant, en longueur selon un axe longitudinal L, entre une première et une deuxième extrémité 122a-b. Le palonnier, présente, entre les deux extrémités 122a-b, une partie centrale 122c reliée au sabot 121 par une liaison principale 130.

Une première bielle de poussée 10 présente une extrémité arrière 10a reliée à la première extrémité 122a du palonnier 122 par une première liaison secondaire 140 et une extrémité avant (non représentée) reliée au moteur 5. La seconde bielle de poussée 11 présente une extrémité arrière 11a reliée à la seconde extrémité 122b du palonnier par une deuxième liaison secondaire 150 et une extrémité avant (non représentée) reliée au moteur 5.

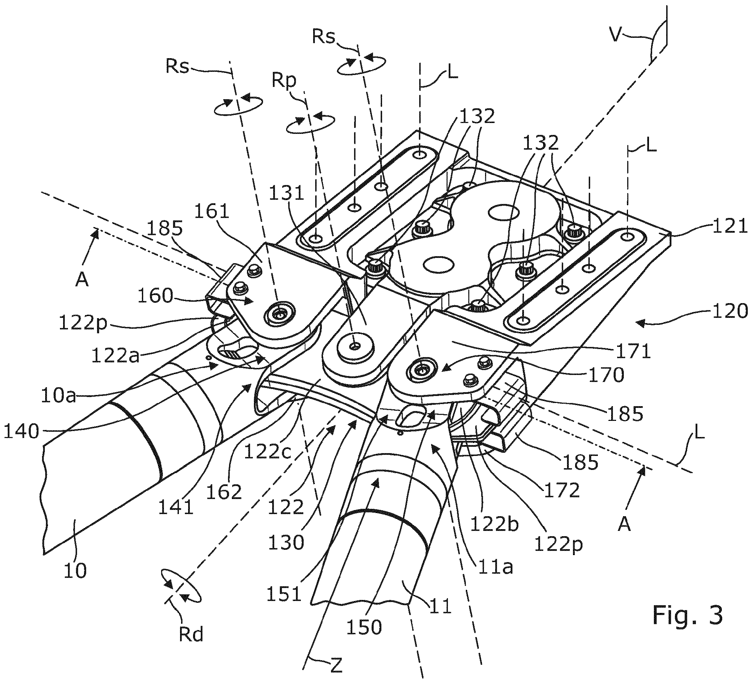

La liaison principale 130 comprend une chape principale fixée 131 au sabot 121, par exemple au moyen de boulons 132, et un axe de rotation principal 133 (représenté schématiquement par un trait d'axe Rp sur la figure 3) supporté par la chape principale 131 et passant au travers d'un orifice 134 arrangé sur la partie centrale 122c, dit orifice central, arrangé traversant le palonnier 122 et équipé d'un pallier à rotule 134a. L'axe de rotation principal 133 est positionné dans le plan de symétrie V du dispositif de liaison 120, passant par l'axe longitudinal X du moteur 5.

Le palonnier 122 comprend en outre deux orifices traversants 135, dits orifices latéraux, arrangés de part et d'autre de l'orifice central 134, avec un orifice latéral 135 à chacune de la première et de la deuxième extrémité du palonnier 122a-b. Chaque orifice latéral 135 est équipé d'un pallier à rotule 135a.

Chacune des première et deuxième liaisons secondaires 140,150 comprend :
- une chape secondaire à deux branches 141,151 entre lesquelles le palonnier 122 est arrangé et où chaque chape secondaire 141,151 est prévue au niveau de chacune des extrémités arrière des bielles 10a, 11a, et
- un axe de rotation secondaire 142,152 (représenté schématiquement par un trait d'axe Rs sur la figure 3) supporté par la chape secondaire 141,151 et logé dans un orifice latéral 135.

Les premières et deuxième bielles 10,11, les liaisons secondaires 140,150, le palonnier 122, la liaison principale 130 et le sabot 121 définissent deux chemins primaires de poussée.

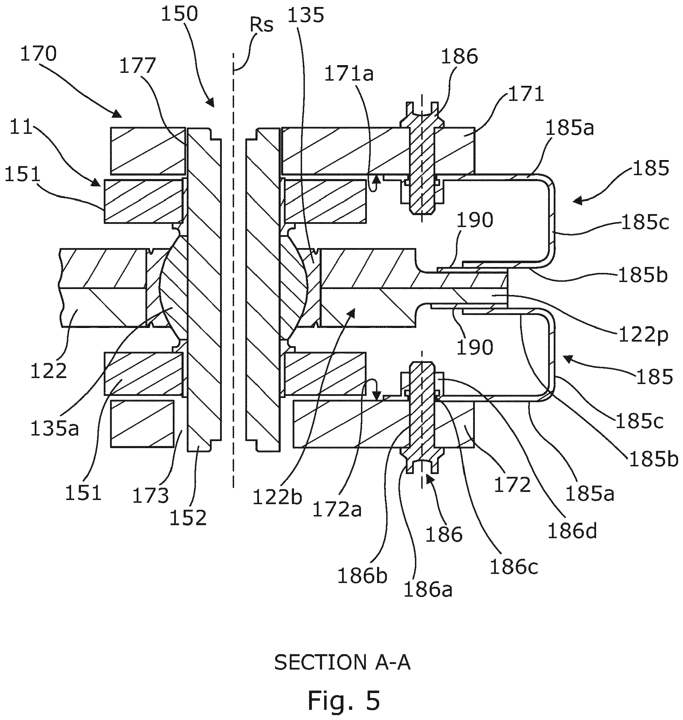

Le dispositif de liaison 120 comprend également une première et une deuxième ferrure 160,170 solidaires du sabot 121, disposées de part et d'autre de la chape principale 131 (lorsque celle-ci est montée sur le sabot) de manière symétrique par rapport au plan de symétrie V. Chacune des première et deuxième ferrures 160,170 comprend une branche supérieure 161,171 et une branche inférieure 162,172 entre lesquelles est positionné le palonnier 122. De manière identique pour chacune de la première ou de la deuxième ferrure 160,170, la branche supérieure et la branche inférieure comprennent chacune une face intérieure plane 171a, 172a (représentées à la figure 5 uniquement, pour la deuxième ferrure). Pour chaque ferrure 160,170, les faces intérieures 171a, 172a de la branche supérieure 161,171 et de la branche inférieure 162,172 sont situées en regard l'une de l'autre et sont parallèles.

Les branches supérieures 161,171 et inférieure 162,172, de la première ferrure 160,170 prennent en sandwich la chape secondaire 140 prévue à l'extrémité arrière 10a de la première bielle. Les branches supérieures 171 et inférieure 172, de la seconde ferrure 160,170 prennent en sandwich la chape secondaire 150 prévue à l'extrémité arrière 10a de la seconde bielle.

Pour chacune des ferrures 160,170, la branche supérieure 161,171 tout comme la branche inférieure 162,172, comprend un trou oblong 163,173 configuré pour loger les extrémités des axes de rotation secondaires 142,152. Chacune des première, respectivement deuxième ferrures 160,170 est ainsi reliée à l'extrémité arrière 10a, 11a de la première, respectivement seconde bielle de poussée via la première, respectivement, deuxième liaison secondaire 142,152.

En cas de défaillance d'une des première ou deuxième bielles de poussée 10,11, la ferrure 160,170 située dans le prolongement de la bielle défaillante limite les mouvements de rotation autour de l'axe de rotation principal 133 générés par la bielle restante. Ainsi, les bielles de poussées 10,11, les liaisons secondaires 142,152, et les ferrures 26 définissent deux chemins secondaires de poussée, entre le moteur 5 et la structure primaire 6a, qui compensent une éventuelle défaillance d'un des chemins primaires de poussée.

Les première et deuxième bielles de poussée 10,11, le sabot 121, le palonnier 122, la liaison principale 130, les première et deuxième liaisons secondaires 140,150 ne sont pas plus décrits car ils peuvent être identiques à ceux de l'art antérieur.

Le palonnier 122 peut pivoter autour d'un axe de rotation de débattement Rd contenu dans le plan de symétrie V et perpendiculaire à l'axe de rotation principal 133, Rp. L'amplitude de débattement du palonnier 122 autour de l'axe de rotation de débattement Rd est limitée par l'espace entre les branches de chaque ferrure 160,170.

Selon l'invention, le palonnier 122 comprend deux extensions 122p, avec une extension arrangée à chaque extrémité du palonnier et prolongeant le palonnier 122 selon une direction parallèle à l'axe longitudinal du palonnier. Chaque extension 122p est associée à une paire de butées élastiques 185 prenant l'extension en sandwich.

Pour la première, respectivement seconde extrémité du palonnier 122a-b, chaque butée 185 d'une paire de butée est positionnée dans l'espace entre une branche de la première, respectivement seconde ferrure 160,170 et l'extension 122p, et est constituée d'une pièce pliée présentant une section en forme de U, avec :
- une première aile 185a, plane, fixée à la branche de ladite ferrure 160, 170 ;
- une seconde aile 185b, plane, parallèle à la première aile, et destinée à être en contact avec l'extension 122p ; et
- une base 185c joignant les deux ailes 122a,b et arrangée à distance de ladite ferrure, de sorte que chaque butée 185 est ouverte vers l'intérieur du dispositif de liaison 120.

Telles que représenté sur les figures 3 à 5, toutes les butées sont identiques. Sur l'exemple représenté sur ces figures, seule une portion de la première aile 185a de chaque butée est en contact avec la branche supérieure ou inférieure 161,162,171,172 de la ferrure sur laquelle la butée est fixée et seule une portion de la seconde aile 185b de chaque butée est destinée à venir en contact avec une extension 122p. La base 122c est ainsi arrangée à l'extérieur de l'espace entre les deux branches de la ferrure 160,170 à laquelle la butée est fixée, et à distance de la portion de la première aile 185a en contact avec la branche de la ferrure et à distance de la portion de la seconde aile 185b en contact avec l'extension 122p.

Chaque butée 185 est montée sans jeu dans l'espace entre la branche supérieure ou inférieure 161,162,171,172 et l'extension 122p. Ainsi, lorsque l'amplitude de débattement du palonnier 122 autour de l'axe de rotation de débattement Rd est nulle (c'est-à-dire que l'axe longitudinal du palonnier est perpendiculaire au plan de symétrie V), la seconde aile 185a est en contact plan-plan avec l'extension 122p du palonnier.

Chaque butée 185 est fixée à une branche supérieure ou inférieure 161,162,171,172 d'une ferrure 16,170 par des moyens de fixations 186. Un moyen de fixation comprend, par exemple, une vis 186a, un orifice traversant 186b arrangé sur la branche et un orifice 186c traversant arrangé sur première aile 185a de la butée pour le passage de la vis, et un écrou cage 186d soudé à la première aile 185a de la butée 185 et arrangé dans l'espace entre la première et la seconde aile 185a,b pour y visser la vis 186a.

Tel que représenté sur la figure 5, on notera que chaque butée 185, de largueur constante, comprend une première aile 185a de plus grande longueur que la seconde aile 185b afin d'avoir suffisamment d'espace sur la première aile 185a pour y arranger les moyens de fixations 186.

Chaque butée 185 est réalisée en métal pouvant se déformer de manière importante sans subir de déformation plastique. La forme spécifique en U de la butée 185 ainsi que le matériau métallique utilisé lui confèrent un comportement de type ressort qui tend à éloigner les ailes 185a-b l'une de l'autre vers une position d'équilibre après qu'une contrainte ait été appliquée sur une aile tendant à la rapprocher de l'autre aile. Dans la position d'équilibre, les deux ailes 185a-b de la butée sont parallèles.

Lorsque les butées 185 sont fixées telles que décrits précédemment, le comportement de type ressort de la butée 185 permet de limiter, de façon linéaire, tout mouvement de rotation du palonnier 122 autour de l'axe de rotation de débattement Rd qui aurait tendance à déformer la butée 185 en rapprochant ses deux ailes l'une de l'autre.

Ainsi, l'ensemble de limitation du débattement du palonnier 122 permet de réduire les oscillations du palonnier 122 autour de l'axe de rotation de débattement Rd, suite au fonctionnement du moteur 5.

De préférence, et tel que représenté à la figure 5, afin de ne pas endommager le palonnier 122 du fait de contacts répétés entre les extensions 122p de ce dernier et les butées 185, chaque extension 122p est pourvues de deux patins d'usures 190, avec un patin d'usure 190 sur chacune des deux faces d'une extension 122p. Chaque patin d'usure est dédié à une butée 185 et est arrangé au niveau de la zone de contact avec l'aile secondaire 185b de la butée qui lui est dédiée. Lorsque l'amplitude de débattement du palonnier 122 autour de l'axe de rotation de débattement Rd est nulle (c'est-à-dire que l'axe longitudinal L du palonnier est perpendiculaire au plan de symétrie V), la seconde aile 185a de chaque butée 185 est un contact avec le patin d'usure 190 qui lui est associé

Chaque patin d'usure 190, réalisé par exemple en métal ou en TEFLON^{®}, est fixé de manière amovible, par exemple via des vis, à l'extension 122p afin d'être facilement remplacé lorsque son taux d'usure est jugé trop important.

## Revendications

1. Assemblage d'un moteur (5) avec un mat (6) d'aéronef, comprenant une attache moteur avant (7), une attache moteur arrière (8), et un assemblage de reprise d'effort comprenant un dispositif de liaison (120) fixé au mat (6) ainsi que deux bielles (10,11), le dispositif de liaison (120) comprenant :
- un sabot (121) fixé au mat (6) ;
- un palonnier (122), s'étendant selon un axe longitudinal entre des première et deuxième extrémités (122a-b), et présentant une partie centrale (122c) reliée au sabot (121) par une liaison principale (130) comprenant un axe de rotation principal (133, Rp) contenu dans un plan de symétrie (V) du dispositif de liaison (120) ;
- deux ferrures solidaires (160,170) du sabot (121) et disposées de part et d'autre du plan de symétrie (V), où chaque ferrure comporte deux branches (161,171,162,172) entre lesquelles est positionné le palonnier (122);
une première, respectivement seconde, bielle comprenant une extrémité avant fixée au moteur (5) et une extrémité arrière (10a, 11a) fixée à la première, respectivement seconde, extrémité du palonnier (122a,b) ainsi qu'à à la première, respectivement seconde ferrure (160,170) par une liaison secondaire (140,150), le palonnier (122) comprenant deux extensions (122p), avec une extension (122p) arrangée à chaque extrémité du palonnier et prolongeant le palonnier (122) selon une direction parallèle à l'axe longitudinal (L) du palonnier, **caractérisé en ce que** chaque extension (122p) est associée à une paire de butées élastiques (185) prenant l'extension en sandwich, et où pour la première, respectivement seconde extrémité du palonnier (122a-b), chaque butée (185), positionnée entre une branche de la première, respectivement seconde ferrure (160,170) et l'extension (122p), présente une section en forme de U ouvert vers l'intérieur du dispositif de liaison (120) avec une première aile (185a) fixée à la branche de ladite ferrure (160, 170), une seconde aile (185b) destinée à être en contact avec l'extension (122p), et une base (122c) joignant les deux ailes (122a,b) et arrangée à distance de ladite ferrure.

2. Assemblage selon la revendication 1, **caractérisé en ce que** chaque extension (122p) comprend deux patins d'usure (190), avec un patin d'usure (190) dédié à chacune des deux butées de la paire de butée (185) associée à l'extension (122p).

3. Assemblage selon la revendication 2, **caractérisé en ce que** chaque patin d'usure (190), est réalisé en métal ou en TEFLON^{®}.

## Patentansprüche

1. Baugruppe eines Triebwerks (5) mit einem Mast (6) eines Luftfahrzeugs, umfassend eine vordere Triebwerksbefestigung (7), eine hintere Triebwerksbefestigung (8) und eine Baugruppe zur Kraftaufnahme, umfassend eine am Mast (6) befestigte Verbindungsvorrichtung (120) und zwei Stangen (10, 11), wobei die Verbindungsvorrichtung (120) Folgendes umfasst:
- einen am Mast (6) befestigten Schuh (121);
- eine Traverse (122), die sich entlang einer Längsachse zwischen einem ersten und einem zweiten Ende (122a - b) erstreckt und einen Mittelteil (122c) aufweist, der mit dem Schuh (121) durch eine Hauptverbindung (130) mit einer Hauptdrehachse (133, Rp) verbunden ist, die in einer Symmetrieebene (V) der Verbindungsvorrichtung (120) liegt;
- zwei Beschläge (160, 170), die fest mit dem Schuh (121) verbunden und auf beiden Seiten der Symmetrieebene (V) angeordnet sind, wobei jeder Beschlag zwei Schenkel (161, 171, 162, 172) aufweist, zwischen denen die Traverse (122) positioniert ist;
wobei eine erste bzw. eine zweite Stange ein vorderes Ende, das am Triebwerk (5) befestigt ist, und ein hinteres Ende (10a, 11a), das am ersten bzw. zweiten Ende des Traverses (122a, b) sowie durch eine sekundäre Verbindung (140, 150) am ersten bzw. zweiten Beschlag (160, 170) befestigt ist, umfasst, wobei die Traverse (122) zwei Verlängerungen (122p) umfasst, wobei eine Verlängerung (122p) an jedem Ende der Traverse befestigt ist und die Traverse (122) in einer zur Längsachse (L) der Traverse parallelen Richtung verlängert, **dadurch gekennzeichnet, dass** jede Verlängerung (122p) mit einem Paar elastischer Anschläge (185) verbunden ist, die die Verlängerung zwischen sich einfassen, und wobei für das erste bzw. das zweite Ende der Traverse (122a - b) jeder zwischen einem Schenkel des ersten bzw. des zweiten Beschlags (160, 170) und der Verlängerung (122p) positionierte Anschlag (185) einen U-förmigen Querschnitt aufweist, der zum Inneren der Verbindungsvorrichtung (120) hin offen ist, mit einem ersten Flügel (185a), der am Schenkel des Beschlags (160, 170) befestigt ist, einem zweiten Flügel (185b), der dazu vorgesehen ist, mit der Verlängerung (122p) in Kontakt zu stehen, und einer Basis (122c), die die beiden Flügel (122a, b) verbindet und in einem Abstand zum Beschlag angeordnet ist.

2. Baugruppe nach Anspruch 1, **dadurch gekennzeichnet, dass** jede Verlängerung (122p) zwei Verschleißplatten (190) umfasst, wobei für jeden der beiden Anschläge des mit der Verlängerung (122p) verbundenen Anschlagpaars (185) eine Verschleißplatte (190) vorgesehen ist.

3. Baugruppe nach Anspruch 2, **dadurch gekennzeichnet, dass** jede Verschleißplatte (190) aus Metall oder Teflon^{®} hergestellt ist.

## Claims

1. Assembly of an engine (5) with an aircraft pylon (6), comprising a front engine attachment (7), a rear engine attachment (8), and a force reacting assembly comprising a connection device (120) fastened to the pylon (6) and two rods (10, 11), the connection device (120) comprising:
- a shoe (121) fastened to the pylon (6);
- a spreader (122), extending along a longitudinal axis between first and second ends (122a-b), and having a central part (122c) connected to the shoe (121) by a main connection (130) comprising a main rotation pin and axis (133, Rp) contained in a plane of symmetry (V) of the connection device (120) ;
- two fittings (160, 170) as one with the shoe (121) and disposed on either side of the plane of symmetry (V), wherein each fitting has two arms (161, 171, 162, 172) between which the spreader (122) is positioned;
a first, respectively second, rod comprising a front end fastened to the engine (5) and a rear end (10a, 11a) fastened to the first, respectively second, end of the spreader (122a, b) and to the first, respectively second, fitting (160, 170) by a secondary connection (140, 150), the spreader (122) comprising two extensions (122p), with one extension (122p) arranged at each end of the spreader and extending the spreader (122) in a direction parallel to the longitudinal axis (L) of the spreader, **characterized in that** each extension (122p) is associated with a pair of elastic stops (185) sandwiching the extension, and wherein, for the first, respectively second, end of the spreader (122a-b), each stop (185), which is positioned between an arm of the first, respectively second, fitting (160, 170) and the extension (122p), has a section in the shape of a U open towards the inside of the connection device (120) with a first leg (185a) fastened to the arm of said fitting (160, 170), a second leg (185b) intended to be in contact with the extension (122p), and a base (122c) joining the two legs (122a, b) and arranged at a distance from said fitting.

2. Assembly according to Claim 1, **characterized in that** each extension (122p) comprises two wear pads (190), with one wear pad (190) dedicated to each of the two stops of the pair of stops (185) associated with the extension (122p).

3. Assembly according to Claim 2, **characterized in that** each wear pad (190) is made of metal or of TEFLON^{®}.
